# EUROPEAN PATENT APPLICATION

(11) **EP 4 667 425 A1**
(43) Date of publication of application: **24.12.2025**
(21) Application number: 24182787.2
(22) Date of filing: 18.06.2024
(51) Int. Cl.: C02F 1/72, C02F 1/76, C02F 103/42

(54) **RECREATIONAL WATER DISINFECTING COMPOSITION AND METHOD**

(71) Applicant: Aqua Tech Consulting Oy, 20660 Littoinen (FI)
(72) Inventor: Tanhuanpää, Niklas, 21530 Paimio (FI); Tanhuanpää, Tuomas, 20660 Littoinen (FI)
(74) Representative: Moosedog Oy

(57) **Abstract**

A disinfecting composition for a recreational water that comprising a hydrochloric acid (HCl) from 2% up to 5% by weight of total weight, a sodium chlorite (NaClO₂) from 5% up to 25% by weight of total weight, and a solvent from 75% up to 93% by weight of total weight. A method for disinfecting a recreational water comprising combining a hydrochloric acid solution comprising hydrochloric acid from 1% up to 10% by weight and a sodium chlorite solution comprising sodium chlorite to from 11% up to 35% by weight and then adding these after at least 5 - 10 minutes to the recreational water.

## Description

### TECHNICAL FIELD

The present disclosure relates to a disinfecting composition for a recreational water and a method for disinfecting the same.

### BACKGROUND

In order to maintain the quality of recreational waters used in swimming pools and hot tubs, these waters need to be cleaned in order to comply with hygienic requirements. In these smaller sized water bodies, there is a constant discharge of germs and therefore they need to be effectively disinfected.

Disinfecting recreational waters involves regular use of disinfectants such as chlorine or bromine to eliminate harmful bacteria, viruses, fungi, moulds and algae. Monitoring and adjusting the pH and alkalinity levels of the recreational water is essential to maintain the effectiveness of these chemicals and to ensure the water is comfortable for users. Maintaining proper pH levels (usually between 7.2 and 7.6) of the recreational water is crucial. If the pH of the recreational water is too high or too low, disinfectants like chlorine become less effective, and it can cause irritation to the skin and eyes. Furthermore, if pH of the recreational water is incorrect, chlorine can form chloramines (combined chlorine) when reacting with organic matter, which can cause irritation and odor and additionally, chlorine requires careful handling and storage to ensure safety.

Therefore, dosage and application of the disinfectants is a crucial part of disinfecting the recreational waters since when overused, the excessive use of disinfectants can lead to high chemical concentrations, which can be harmful to the users, causing skin and eye irritation. Excessive use further corrodes pool or hot tub equipment and surfaces and also causes scaling on surfaces. But on the other hand, when underused, insufficient disinfectant levels can lead to bacterial growth and algae, making recreational waters pool unsafe.

Disinfecting small bodies of water with capacities under 4000 litres, such as small pools, spa pools and hot tubs, typically suitable for children or for limited adult use, like cooling off on hot days rather than swimming laps is important and even more challenging. Due to their smaller volume, maintaining chemical balance and cleanliness is more challenging, as smaller pools can become contaminated more quickly but also additionally challenging due to the higher water temperature, smaller water volume, and frequent usage.

Therefore, in light of the foregoing discussion, there exists a need to overcome the aforementioned drawbacks associated with disinfecting recreational waters.

### SUMMARY

The aim of the present disclosure is to provide a disinfecting composition for a recreational water and a method for disinfecting. Advantageous features are set out in the appended dependent claims.

Embodiments of the present disclosure enable to effectively and suitably disinfect recreational water which is used in smaller pools, hot tubs and similar.

Additional aspects, advantages, features and objects of the present disclosure would be made apparent the detailed description of the illustrative embodiments construed in conjunction with the appended claims that follow.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a disinfecting composition for a recreational water, the disinfecting composition comprising:
a hydrochloric acid (HCl) from 2% up to 5% by weight of total weight,
a sodium chlorite (NaClO₂) from 5% up to 25% by weight of total weight, and
a solvent from 75% up to 93% by weight of total weight.

In a second aspect, an embodiment of the present disclosure provides a method for disinfecting a recreational water, the method comprising:
- combining a hydrochloride solution comprising hydrochloric acid from 1% up to 10% by weight and a sodium chlorite solution comprising sodium chlorite to from 11% up to 35% by weight to form a disinfecting composition;
- adding the disinfecting composition after at least 5 - 10 minutes to the recreational water.

Sodium chlorite (NaClO₂) is generally not used as a primary disinfectant for swimming pools. Instead, in the disinfecting composition, sodium chlorite is primarily used to produce chlorine dioxide (ClO₂), which is a powerful oxidizing agent and disinfectant. The advantage of sodium chlorite in comparison to chlorine, which is a well-known disinfectant, is that it is in a liquid form and is therefore easier to store and handle. Chlorine dioxide produced by sodium chlorite is highly effective against bacteria, viruses, and protozoa. Advantages include that in comparison to chlorine, it works well in a broad pH range. From the one hand, this reduces the need for additional chemicals to adjust the pH levels in the swimming pools and, on the other hand, this makes it more suitable for wide range of uses, including cases, where controlling of the pH is more complex due to higher water temperature, smaller water volume, and frequent usage, for example uses in small pools, hot tubs. Beneficially, chlorine dioxide produced by sodium chlorite can oxidize organic contaminants and biofilm, leading to cleaner water. Furthermore, chlorine dioxide produced by sodium chlorite produces fewer disinfection by-products like chloramines, which can cause irritation to the eyes and skin and therefore, compared to traditional chlorine treatments sodium chlorite is safer for the user. Consequentially, this also means that when using sodium chlorite, there is less damage to the pools and hot tubs.

In the embodiment, sodium chlorite concentration in the disinfecting composition is from 5% up to 20% by weight of total weight. The concentration of sodium chlorite may be for example from 5, 10, 15, or 20% by weight of total weight up to 10, 15, 20 or 25% by weight of total weight. This sodium chlorite concentration in the disinfecting composition is low enough that it is easy to handle, but still effective enough to disinfect the recreational water effectively without causing damage to the users and the pool equipment. Lower concentrations of sodium chlorite in the disinfecting composition would not allow disinfecting and higher concentration of sodium chlorite would be damaging.

In order to activate sodium chlorite to produce chlorine dioxide, it needs to be activated with an acid. One option for the acid is hydrochloric acid. The following reaction takes place:

5NaClO₂ + 4HCl→4ClO₂ +5NaCl + 2H₂O

The main advantage of using hydrochloric acid in the disinfectant composition is that hydrochloric acid acts as a catalyst that facilitates the chemical conversion of sodium chlorite into chlorine dioxide. Without hydrochloric acid to lower the pH of the recreational water and drive the reaction, chlorine dioxide would not be efficiently produced. The reaction requires a low pH environment of the recreational water to proceed effectively and hydrochloric acid provides the necessary acidity to create the right conditions for chlorine dioxide generation.

The hydrochloric acid concentration in the disinfecting composition is from 2% up to 5% by weight of total weight. The concentration of hydrochloric acid may be for example from 2, 3 or 4% by weight of total weight up to 3, 4 or 5% by weight of total weight. This hydrochloric acid concentration in the disinfecting composition is low enough that it is easy to handle, but still effective enough to facilitate the chemical conversion of sodium chlorite into chlorine dioxide. Lower concentrations of hydrochloric acid would not provide the of the recreational water level needed for the and higher concentration of hydrochloric acid would raise the pH of the recreational water too high and it would be damaging to the users and the pool equipment.

The solvent concentration in the disinfecting composition is from 75% up to 93% by weight of total weight. Exact concentration depends on the concentration of hydrochloric acid and the concentration of sodium chlorite. Solvent is needed to make up the volume in order to dilute the sodium chlorite and the hydrochloric acid.

The technical effect of the disinfecting composition is that it works effectively to disinfect the recreational waters. It keeps the pH of the recreational water at level which it disinfects efficiently but also maintains the integrity of the pool materials and pool equipment. It is easy to use, eco-friendly and safe for the users. Since chlorine dioxide produced from sodium chlorite is highly effective, it can be used in smaller amounts than compared to traditional chlorine, resulting fewer chemicals being added to the environment. In addition, the disinfecting composition does not wear the materials of the pools and hot tubs (eg plastic, rubber). The disinfecting composition primarily produces chlorine dioxide, water, and sodium chloride, eg the disinfecting composition produces fewer harmful by-products compared to some other disinfection methods.

Optionally, the solvent in the disinfecting composition is water. The advantage of water as the solvent is that it dissolves hydrochloric acid and sodium chlorite and facilitates the reaction between hydrochloric acid and sodium chlorite to effectively produce chlorine dioxide. Furthermore, water is a safe and easy to handle solvent.

The present disclosure relates to the second aspect as described above. Various embodiments and variants disclosed above, with respect to the aforementioned first aspect, apply *mutatis mutandis* to the second aspect.

Method for disinfecting a recreational water comprises combining a hydrochloric acid solution comprising hydrochloric acid from 1% up to 10% by weight and a sodium chlorite solution comprising sodium chlorite to from 11% up to 35% by weight to form a disinfecting composition and adding the disinfecting composition after at least 5 - 10 minutes to the recreational water.

The concentration of hydrochloric acid in the hydrochloric acid solution in the disinfecting composition is from 1% up to 10% by weight of total weight. The concentration of hydrochloric acid in the hydrochloric acid solution may be for example from 1, 3, 5, 7 or 9% by weight of total weight up to 2, 4, 6, 8 or 10% by weight of total weight. These concentrations allow to make up the disinfecting composition for a recreational water where the hydrochloric acid concentration is from 2% up to 5% by weight of total weight. The technical effect of this hydrochloric acid concentration is described above.

The concentration of sodium chlorite in the sodium chlorite acid solution in the disinfecting composition is from 11% up to 35% by weight of total weight. The concentration of sodium chlorite in the sodium chlorite solution may be for example from 11, 15, 20, 25, or 30% by weight of total weight up to 15, 20, 25, 30 or 35% by weight of total weight. These concentrations allow to make up the disinfecting composition for the recreational water where the sodium chlorite concentration is from 5% up to 25% by weight of total weight. The technical effect of this sodium chlorite concentration is described above along with the technical benefits of using the disinfecting composition comprising hydrochloric acid and sodium chlorite.

This method for disinfecting the recreational water is easy to use since only two chemicals are combined, the hydrochloric acid solution and the sodium chlorite solution. This straightforward combining does not require complex equipment or procedures. The reaction can be carried out on-site, close to the recreational water, allowing for immediate production and use of chlorine dioxide without the need for transportation and storage of chlorine dioxide which is a gaseous compound and would need special vessels for transporting. In addition, combining the hydrochloric acid solution and the sodium chlorite solution on-site as needed, there is minimal leftover chemical waste since only a necessary amount of the disinfecting composition is produced.

Before the disinfecting composition can be added to the recreational water, one needs to wait at least 5 - 10 minutes. This time is needed so that the hydrochloric acid can activate sodium chlorite to produce chlorine dioxide that has the disinfecting properties. 5 - 10 minutes is sufficient because hydrochloric acid and sodium chlorite react rapidly once combined to form chlorine dioxide. If the adding of the disinfecting composition is done before 5 minutes, the time is too short and the reaction is not complete and not enough chlorine dioxide is formed. If the waiting time is too long, the volatile and unstable chlorine dioxide will vaporise and the disinfecting composition is not effective.

This method for disinfecting the recreational water allows to control the exact concentration of hydrochloric acid and sodium chlorite in the mixture so that the disinfecting composition would be effective. Furthermore, since the combining of the hydrochloric acid solution and the sodium chlorite solution is fast and the disinfecting composition can be used almost immediately, it can be used on-site next to the pool. The concentration of chlorine dioxide can be adjusted by varying the amounts of the sodium chlorite solution and the hydrochloric acid solution, making the method adaptable for different disinfection needs, if needed, for example, taking into account the temperature, pH or similar of the recreational water. Furthermore, a volume of the recreational water can be taken into account.

This method can be scaled up or down depending on the volume of disinfectant required for disinfecting the recreational water, making it suitable for various applications from small hot tubs to mid-sized pools. Optionally, in the method for disinfecting the recreational water, the hydrochloric acid solution comprises 4% hydrochloric acid by weight and the sodium chlorite solution comprises 25% sodium chlorite by weight. This method comprises the hydrochloric acid solution and the sodium chlorite solution with concentrations that provide effective disinfecting of the recreational water at wide pH range because chlorine dioxide is effectively produced. Furthermore, pH of the recreational water is kept at level which allows effective disinfecting but also maintains the integrity of the pool materials and pool equipment. With the hydrochloric acid solution comprising 4% hydrochloric acid by weight and the sodium chlorite solution comprising 25% sodium chlorite by weight, the method for disinfecting the recreational water is safe and easy to carry out.

Optionally, a volume of recreational water is less than 4000 litres. The method for disinfecting the recreational water is most effective for the recreational water volume that is less than 4000 litres, eg above-ground small pools, kiddie pools, hot tubs or small plunge pools. For these, maintaining the chemical balance and cleanliness is more challenging, as smaller pools can become contaminated more quickly but also additionally challenging due to the higher water temperature, smaller water volume, and frequent usage. The method for disinfecting the recreational water is effective with providing enough chlorine dioxide that can disinfect the recreational water of these small volume pools in a simple and effective manner.

Optionally, the hydrochloric acid solution and the sodium chlorite solution are combined at equal volumes. The advantage of combining the hydrochloric acid solution and the sodium chlorite solution at equal volumes is that there is no need for special equipment to measure out exact volumes since any one fixed volume volumetric container can be used to measure out equal volumes of the hydrochloric acid solution and the sodium chlorite solution to form the disinfecting composition.

### EXAMPLES

### Example 1. Disinfecting pools from 800 litres to 1200 litres.

50 ml of the hydrochloric acid solution comprising 4% of hydrochloric acid by weight is combined with 50 ml of the sodium chlorite solution comprising 25% of sodium chlorite by weight to form a disinfecting composition. After 10 minutes the disinfecting composition is added to a pool that contains 800 litres to 1200 litres of recreational water.

### Example 2. Disinfecting pools from 1200 litres up to 4000 litres.

75 ml of the hydrochloric acid solution comprising 4% of hydrochloric acid by weight is combined with 75 ml of the sodium chlorite solution comprising 25% of sodium chlorite by weight to form a disinfecting composition. After 10 minutes the disinfecting composition is added to a pool that contains 800 litres to 1200 litres of recreational water.

## Claims

1. A disinfecting composition for a recreational water, the disinfecting composition comprising:
a hydrochloric acid (HCl) from 2% up to 5% by weight of total weight,
a sodium chlorite (NaClO₂) from 5% up to 25% by weight of total weight, and
a solvent from 75% up to 93% by weight of total weight.

2. The disinfecting composition according to claim 1, wherein the solvent is water.

3. A method for disinfecting a recreational water, the method comprising:
- combining a hydrochloric acid solution comprising hydrochloric acid from 1% up to 10% by weight and a sodium chlorite solution comprising sodium chlorite to from 11% up to 35% by weight to form a disinfecting composition;
- adding the disinfecting composition after at least 5 - 10 minutes to the recreational water.

4. The method for disinfecting the recreational water according to claims 3 and 4, wherein the hydrochloric acid solution comprises 4% hydrochloric acid by weight and the sodium chlorite solution comprises 25% sodium chlorite by weight.

5. The method for disinfecting the recreational water according to claims 3 to 4, wherein a volume of the recreational water is less than 4000 litres.

6. The method for disinfecting the recreational water according to claims 3 to 5, wherein the hydrochloric acid solution and the sodium chlorite solution are combined at equal volumes.
